# EUROPEAN PATENT SPECIFICATION

(11) **EP 4 614 589 B1**
(45) Date of publication and mention of the grant of the patent: **09.09.2026**
(21) Application number: 25161477.2
(22) Date of filing: 04.03.2025
(51) Int. Cl.: H01M 4/133, H01M 4/36, H01M 10/054, H01M 4/02

(54) **NEGATIVE ELECTRODE PLATE, SODIUM-ION BATTERY, AND ELECTRONIC DEVICE**
NEGATIVELEKTRODENPLATTE, NATRIUMIONENBATTERIE UND ELEKTRONISCHE VORRICHTUNG
PLAQUE D'ÉLECTRODE NÉGATIVE, BATTERIE SODIUM-ION ET DISPOSITIF ÉLECTRONIQUE

(30) Priority: 08.03.2024 CN 202410268840
(43) Date of publication of application: 10.09.2025
(73) Proprietor: Hithium Tech HK Limited, Hong Kong (HK)
(72) Inventor: QU, Renjie, Xiamen, Fujian, 361100 (CN); WANG, Shiwen, Xiamen, Fujian, 36110 (CN)
(74) Representative: Manitz Finsterwald Patent- und Rechtsanwaltspartnerschaft mbB

(56) References cited:
- EP-A1- 4 220 755
- CN-A- 116 387 472
- CN-A- 116 470 004
- CN-A- 117 558 872
- US-B2- 11 450 881

## Description

### FIELD

The present disclosure relates to the technical field of sodium-ion battery, and specifically, to a negative electrode plate, a sodium-ion battery, and an electronic device.

### BACKGROUND

With the expanding use of lithium-ion batteries in the energy storage market, the industry is rapidly transitioning into the terawatt-hour (TWh) era, where supply chain security has become a critical concern of the TWh era, especially the emerging challenge of limited availability of lithium resources. Sodium-ion battery, known for the abundant raw material supply and low-cost advantages thereof, has garnered increasing attention. However, since metallic sodium has higher reduction potential and greater molecular weight than metallic lithium, the energy density of sodium-ion batteries with similar working principles is significantly lower than that of lithium-ion batteries. In addition, due to the greater ionic radius of sodium ions, a greater volumetric expansion may occur during intercalation and deintercalation of sodium ions, leading to reduced cycle reversibility, low energy density, and rapid capacity degradation, which restrict the practical application thereof.

To improve energy density of the cell, the sodium-ion battery without a negative active material has emerged as an ultimate goal for enhancing the energy density. CN 116 387 472 A discloses a negative electrode slurry includes a first type of negative electrode active material including at least one selected from graphite, graphene, carbon nanotubes, and soft carbon, a second type of negative electrode active material, a solid electrolyte, a conductive agent and a binder. CN 117 558 872A discloses a negative electrode active material layer includes an active material including at least one selected from graphite, hard carbon, soft carbon, silicon-carbon composite, and silicon-oxide composite, a binder, and a conductive agent. However, the battery without a negative active material has relatively poor capabilities of liquid absorption and retention at the negative electrode side, resulting in an acceleration of the decay of the cell during cycling.

### SUMMARY

The present disclosure is intended to address at least one of the technical problems in the related art to some extent. Therefore, the present disclosure provides a negative electrode plate, a sodium-ion battery, and an electronic device. The present invention is set out in the appended set of claims. In the present disclosure, by providing holes in a surface of the negative electrode plate, a contact angle between an electrolyte solution and a negative electrode plate surface can be effectively reduced, while increasing a surface roughness of the negative electrode plate, enabling a sodium metal layer deposited on a surface of the negative electrode plate to have a stronger bonding force to the surface of the negative electrode plate. Furthermore, an electric field on the negative electrode plate surface can be adjusted, and the uniformity and compactness of the deposited sodium on the negative electrode plate surface can be improved. Additionally, the carbon coating contains a solid electrolyte, which can further enhance an affinity between the carbon coating and the electrolyte solution, thereby improving a wettability and ionic migration rate on the negative electrode side.

In an aspect of the present disclosure, the present disclosure provides a negative electrode plate. According to an embodiment of the present disclosure, the negative electrode plate includes a negative electrode current collector and a carbon coating disposed on at least a portion of a surface of the negative electrode current collector. The carbon coating includes a carbon material, a solid electrolyte, and a polymer binder. A weight ratio of the carbon material, the solid electrolyte, and the polymer binder is (60 to 80): (0.5 to 10): (10 to 30). The carbon material is a combination of a one-dimensional carbon material and at least one selected from zero-dimensional carbon material, two-dimensional carbon material, and three-dimensional carbon material. The solid electrolyte includes at least one of β"-Al₂O₃, Na₃Zr₂Si₂PO₁₂, Na₃₊ₓLaₓZr₂ₓSi₂PO₁₂, Na₃PS₄, Na₁₁Sn₂PS₄, and Na₇P₃S₁₁, where 0 < x ≤ 0.5. A surface of the carbon coating facing away from the negative electrode current collector has holes extending along the thickness direction of the carbon coating. A depth of the holes is smaller than a thickness of the carbon coating. The depth of the holes is denoted as h₂, and the thickness of the carbon coating is denoted as h₁, h₂ and h₁ satisfying: 40% ≤ h₂/h₁ ≤ 80%. The holes satisfy at least one of the following conditions: the holes have each a diameter ranging from 1 µm to 3 µm; and a density of the holes on the surface of the carbon coating ranges from 1,000 holes/mm² to 3,000 holes/mm².

For the negative electrode plate according to an embodiment of the present disclosure, by providing the holes in the surface of the negative electrode plate, a contact angle between an electrolyte solution and a negative electrode plate surface can be effectively reduced, which enables the electrolyte solution to rapidly wet the surface of the negative electrode plate, thereby significantly enhancing the liquid absorption and retention capability of the negative electrode plate and reducing the ionic transport impedance on the negative electrode side. Meanwhile, by providing the holes in the surface of the negative electrode plate, a surface roughness of the negative electrode plate is increased, enabling a sodium metal layer deposited on a surface of the negative electrode plate to have a stronger bonding force to the surface of the negative electrode plate. In this way, issues such as peeling and pulverization of the sodium deposition layer during cycling can be prevented, and the irreversible capacity loss can be avoided. Furthermore, an electric field on the negative electrode plate surface can be adjusted, and the uniformity and compactness of the deposited sodium on the negative electrode plate surface can be improved. Additionally, the solid electrolyte in the carbon coating can further enhance an affinity between the carbon coating and the electrolyte solution, thereby improving a wettability and ionic migration rate on the negative electrode side.

Furthermore, the negative electrode plate of the above embodiments of the present disclosure may further have the following additional technical features.

In some embodiments of the present disclosure, a contact angle θ between a surface of the negative electrode plate and an electrolyte solution satisfies: 0° ≤ θ ≤ 10°.

In some embodiments of the present disclosure, a roughness Ra of a surface of the negative electrode plate satisfies: 0.4µm ≤ Ra ≤ 3.2µm. The roughness Ra of the surface of the negative electrode plate is calculated using ISO 25178 standard.

In some embodiments of the present disclosure, the thickness h1 of the carbon coating is not greater than 5µm.

In some embodiments of the present disclosure, the carbon material satisfies at least one of the following conditions: the one-dimensional carbon material includes at least one of carbon nanotubes and carbon fibers; and the zero-dimensional carbon material includes at least one of acetylene black, furnace black, Ketjen black, and carbon quantum dots; and the two-dimensional carbon material includes at least one of graphene and multilayer graphite sheet; and the three-dimensional carbon material includes at least one of mesophase carbon microbeads, natural graphite, artificial graphite, hard carbon, and porous activated carbon.

In some embodiments of the present disclosure, the polymer binder includes at least one of polyvinylidene fluoride, polytetrafluoroethylene, styrene-butadiene rubber, polyacrylates, polyacrylonitriles, polyacrylic acids, sodium polyacrylates, carboxymethyl cellulose, sodium alginate, gum arabic, xanthan gum, and guar gum.

In a second aspect of the present disclosure, the present disclosure provides a sodium-ion battery. According to an embodiment of the present disclosure, the sodium-ion battery includes the negative electrode plate described above. As a result, the cycling performance of the sodium-ion battery can be effectively improved.

In a third aspect of the present disclosure, the present disclosure provides an electric device. According to an embodiment of the present disclosure, the electric device includes the sodium-ion battery described above. As a result, the electric device possesses all the advantages of the sodium-ion battery, which are not repeated herein.

Additional aspects and advantages of the present disclosure will be partially set forth in the description that follows, a part of which will become apparent from the description, or may be learned through practice of the present disclosure.

### BRIEF DESCRIPTION OF THE DRAWINGS

The aforementioned and/or additional aspects and advantages of the present disclosure will become more apparent and readily understood from the following detailed description in conjunction with the accompanying figures, in which:

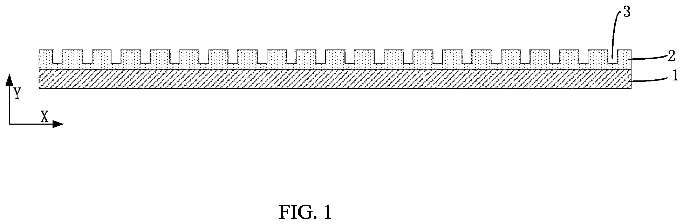

Figure 1 is a schematic structural diagram of a negative electrode plate according to an embodiment of the present disclosure.

### Reference character:

1-Negative electrode current collector; 2-Carbon coating; 3-Holes.

### DETAILED DESCRIPTION

Embodiments of the present disclosure are described in detail below. An example of the embodiments is illustrated in the accompanying drawings, in which the same or similar reference character throughout denotes the same or similar elements or elements having the same or similar functions. The embodiments described below by reference to the accompanying drawings are illustrative and are intended to explain, rather than limiting, the present disclosure.

In an aspect of the present disclosure, the present disclosure provides a negative electrode plate. According to an embodiment of the present disclosure, referring to Figure 1, the negative electrode plate includes a negative electrode current collector 1, and a carbon coating 2 disposed on at least a portion of a surface of the negative electrode current collector 1. The carbon coating 2 includes a carbon material, a solid electrolyte, and a polymer binder. A surface of the carbon coating 2 facing away from the negative electrode current collector 1 has holes 3 extending along a thickness direction (i.e., direction Y) of the carbon coating 2. A depth of the holes 3 is smaller than a thickness of the carbon coating 2. Therefore, in the present disclosure, by providing the holes in the surface of the negative electrode plate, a contact angle between an electrolyte solution and a negative electrode plate surface can be effectively reduced, which enables the electrolyte solution to rapidly wet the surface of the negative electrode plate, thereby significantly enhancing the liquid absorption and retention capability of the negative electrode plate and reducing the ionic transport impedance on the negative electrode side. Meanwhile, by providing the holes in the surface of the negative electrode plate, a surface roughness of the negative electrode plate is increased, enabling a sodium metal layer deposited on a surface of the negative electrode plate to have a stronger bonding force to the surface of the negative electrode plate. In this way, issues such as peeling and pulverization of the sodium deposition layer during cycling can be prevented, and the irreversible capacity loss can be avoided. Furthermore, an electric field on the negative electrode plate surface can be adjusted, and the uniformity and compactness of the deposited sodium on the negative electrode plate surface can be improved. Additionally, the solid electrolyte in the carbon coating can further enhance an affinity between the carbon coating and the electrolyte solution, thereby improving a wettability and ionic migration rate on the negative electrode side.

It may be noted that in Figure 1, the direction Y indicates the thickness direction of the negative electrode plate, and the direction X indicates a width direction of the negative electrode plate.

The principle by which the negative electrode plate provided in the present disclosure can realize the above beneficial effect is described in detail below.

In the related art, a negative electrode side of a sodium-ion battery without a negative active material is generally a metal foil or a modified foil, and thus the negative electrode side has poor liquid absorption and retention capability. At the same time, in order to stabilize the negative electrode interface, the cell is usually subjected to an electrical performance test under a great external pressure. During the cycling process, due to the weak liquid absorption capability of the negative electrode side per se, in combination with the extruding effect of the cycling volume expansion on the electrolyte solution, the amount of the electrolyte solution on the negative electrode side may become lower with the cycling, which in turn leads to the increasingly significant polarization of the cell and the acceleration of the cyclic degradation of the cell.

Additionally, in the related art, due to the overly smooth surface of the negative electrode plate, the sodium metal layer deposited on the surface during cycling tends to peel off and pulverize, which results in electric insulation caused by the loss of contact with the conductive network, thereby affecting the capacity and cycling life of the cell.

To solve the above technical problem, in the present disclosure, the carbon coating is provided on at least a portion of the surface of the negative electrode current collector, and the holes (i.e., straight holes) extending along the thickness direction of the carbon coating are provide in the surface of the carbon coating. The depth of the holes is smaller than the thickness of the carbon coating (i.e., the holes do not penetrate through the carbon coating). In this way, the contact angle between the electrolyte solution and the surface of the negative electrode plate can be effectively reduced, which enables the contact angle θ between the surface of the negative electrode plate and the electrolyte solution to satisfy 0° ≤ θ ≤ 10° (or even 0° ≤ θ ≤ 5°), thereby ensuring rapid wetting of the electrolyte solution on the surface of the negative electrode plate. Thus, the liquid absorption and retention capability of the negative electrode plate is significantly enhanced, and the ionic transport impedance on the negative electrode side is reduced. The negative electrode plate, when used in a sodium-ion battery, can effectively improve the cycling performance of the sodium-ion battery. Meanwhile, by providing the holes in the surface of the negative electrode plate, a surface roughness of the negative electrode plate is increased to be in the range of 0.4 µm ≤ Ra ≤ 3.2 µm (or even 2.4 µm ≤ Ra ≤ 3.2 µm), enabling a sodium metal layer deposited on a surface of the negative electrode plate to have a stronger bonding force to the surface of the negative electrode plate. In this way, issues such as peeling and pulverization of the sodium deposition layer during cycling can be prevented, and the irreversible capacity loss can be avoided. In addition, by providing the holes in the surface of the negative electrode plate, the electric field on the negative electrode plate surface can be adjusted, and the uniformity and compactness of the deposited sodium on the negative electrode plate surface can be improved.

Additionally, the carbon coating contains the carbon material, the solid electrolyte, and the polymer binder. Through the design of the carbon coating, the electrical conductivity of the negative electrode side is enhanced. Meanwhile, the solid electrolyte in the carbon coating can further enhance an affinity between the carbon coating and the electrolyte solution, thereby improving a wettability and ionic migration rate on the negative electrode side.

According to some specific embodiments of the present disclosure, the depth of the holes is denoted as h₂, and the thickness of the carbon coating is denoted as h₁, where h₂ and h₁ satisfy: 40% ≤ h₂/h₁ ≤ 80%. By limiting the depth of the holes within the above range, it can be further effectively ensured that the contact angle between the electrolyte solution and the surface of the negative electrode plate is reduced while the surface roughness of the negative electrode plate is increased. The inventors have found that if the depth of the holes is excessively small, i.e., insufficient drilling depth, the absorption amount of the electrolyte solution will be inadequate, thereby affecting the cycling performance of the sodium-ion battery. If the depth of the holes is excessively great, i.e., the holes are extremely close to the negative electrode current collector, foil leakage may occur, thereby affecting the metal deposition at the positions where the foil leakage occurs.

According to the invention, the holes have a diameter ranging from 1 µm to 3 µm, and a density of the holes in the surface of the carbon coating ranges from 1,000 holes/mm² to 3,000 holes/mm². By limiting the diameter and density of the holes within the above ranges, it can be further effectively ensured that the contact angle between the electrolyte solution and the surface of the negative electrode plate is reduced while the surface roughness of the negative electrode plate is increased.

In an embodiment of the present disclosure, the provision of the holes in the surface of the negative electrode plate and the addition of solid electrolyte to the carbon coating can both effectively reduce the contact angle between the electrolyte solution and the surface of the negative electrode plate, and in this case, the contact angle θ between the surface of the negative electrode plate and the electrolyte solution can be maintained in the range of 0° ≤ θ ≤ 10° (or even 0° ≤ θ ≤ 5°), ensuring rapid wetting of the electrolyte solution on the surface of the negative electrode plate. In this way, the liquid absorption and retention capability of the negative electrode plate can be significantly enhanced, and the ionic transport impedance on the negative electrode side can be reduced.

It may be noted that the contact angle refers to an angle θ defined between a tangent to the gas-liquid interface at the liquid phase and a solid-liquid interface line, serving as a measure of wettability, where the tangent to the gas-liquid interface is taken at an intersection of gas, liquid, and solid phases.

In an embodiment of the present disclosure, by providing the holes in the surface of the roughness of the surface of the negative electrode plate can be effectively reduced, allowing the roughness of the surface of the negative electrode to be in the range of 0.4 µm ≤ Ra ≤ 3.2 µm (or even 2.4 µm ≤ Ra ≤ 3.2 µm). Thus, the sodium metal layer deposited on the surface of the negative electrode plate has stronger binding force to the surface of the negative electrode plate, thereby effectively preventing issues such as peeling and pulverization of the sodium deposition layer during cycling and avoiding irreversible capacity loss.

In an embodiment of the present disclosure, the thickness h₁ of the carbon coating is not greater than 5µm.

According to the invention, a weight ratio of the carbon material, the solid electrolyte, and the polymer binder is (60 to 80): (0.5 to 10): (10 to 30). By limiting the weight ratio of the carbon material, the solid electrolyte, and the polymer binder within the above range, it can be further ensured that the electrical conductivity of the negative electrode side is enhanced and that the affinity between the carbon coating and the electrolyte solution is improved, thereby further enhancing the wettability and increasing the ion migration rate on the negative electrode side.

According to the invention, the carbon material is a combination of a one-dimensional carbon material and at least one selected from the group consisting of zero-dimensional carbon material, two-dimensional carbon material, and three-dimensional carbon material. The one-dimensional carbon material accounts for 60 wt% to 90 wt% based on the total weight of the carbon material as 100%. As a result, through the combination of carbon materials of different dimensions, the carbon coating can form a three-dimensional structure, which further enhances the liquid retention capability within the carbon coating and facilitates the deposition of sodium metal within the carbon coating, thereby reducing the deposition volume of sodium metal on the surface of the negative electrode plate and mitigates volume expansion.

The one-dimensional carbon material includes, but is not limited to, at least one of carbon nanotubes and carbon fibers, preferably carbon fibers, for providing a framework throughout the coating. The zero-dimensional carbon material includes, but is not limited to, at least one of acetylene black, furnace black, Ketjen black, and carbon quantum dots. The two-dimensional carbon material includes, but is not limited to, at least one of graphene and multilayer graphite sheet. The three-dimensional carbon material includes, but is not limited to, at least one of mesophase carbon microbeads, natural graphite, artificial graphite, hard carbon, and porous activated carbon. The combination of carbon fibers and acetylene black is preferred.

In an embodiment of the present disclosure, the specific type of the solid electrolyte is not particularly limited. Those skilled in the art may select as needed. Solid oxide electrolytes may be selected, such as β"-Al₂O₃, NZSP-type, NLZSP-type (e.g., Na₃Zr₂Si₂PO₁₂, Na₃₊ₓLaₓZr₂ₓSi₂PO₁₂ (0 < x ≤ 0.5) and the like). Alternatively, solid sulfide electrolytes may be selected, such as Na₃PS₄, Na₁₁Sn₂PS₄, Na₇P₃S₁₁ and the like. Alternatively, solid halide electrolytes may be selected, such as Na₃MX₆ and the like. Alternatively, solid anti-perovskite electrolytes may be selected, such as X₃BA and the like. Alternatively, solid borohydride electrolytes may be selected, such as Na₂(BₙHₙ) and the like. Preferably, at least one of Na₃Zr₂Si₂PO₁₂ and Na₃₊ₓLaₓZr₂ₓSi₂PO₁₂ (0 < x ≤ 0.5) is selected.

In an embodiment of the present disclosure, the specific type of polymer binder is not particularly limited and those skilled in the art may select as needed. Examples of the polymer binder includes at least one of polyvinylidene fluoride (PVDF), polytetrafluoroethylene (PTFE), styrene-butadiene rubber, polyacrylates, polyacrylonitriles, polyacrylic acids, sodium polyacrylates, carboxymethyl cellulose, sodium alginate, arabic gum, xanthan gum, and guar gum.

According to some further specific embodiments of the present disclosure, the holes may be formed in the surface of the carbon coating using laser radiation, thereby further effectively ensuring the reduction of the contact angle between the electrolyte solution and the surface of the negative electrode plate and the increasing of the roughness of the surface of the negative electrode plate.

The preparation method for the aforementioned negative electrode plate includes: 1) mixing a carbon material, a solid electrolyte, and a polymer binder uniformly in a predetermined ratio, adding a solvent and stirring evenly to form a slurry, coating the slurry onto the negative electrode current collector, drying for subsequent use; and 2) forming the holes (i.e., straight holes) in a surface of the carbon coating using laser radiation to obtain the negative electrode plate of the present disclosure.

In a second aspect of the present disclosure, the present disclosure provides a sodium-ion battery. According to an embodiment of the present disclosure, the sodium-ion battery includes the negative electrode plate described above. As a result, the cycling performance of the sodium-ion battery can be effectively improved.

Specifically, the sodium-ion battery described above may be a sodium-ion battery without a negative active material, which refers to a battery in which sodium ions are deintercalated and *in situ* deposited onto the current collector of the negative electrode (in the present disclosure, sodium ions are deposited onto the carbon coating on the surface of the negative electrode current collector). During production and manufacturing, no negative active material is added, and the negative electrode current collector is used solely as the nominal negative electrode. However, such a negative electrode current collector does not have the function of a negative electrode. Only when metal migrates from the positive electrode material to the surface of the negative electrode current collector subsequent to the charging (in the present disclosure, migrating to the carbon coating on the surface of the negative electrode current collector), a metal layer can be formed on the negative electrode current collector to enable the negative electrode current collector to become a true negative electrode.

Specifically, the sodium-ion battery without a negative active material includes a positive electrode plate, a separator, a negative electrode plate, and an electrolyte solution. The separator is disposed between the positive electrode plate and the negative electrode plate. The material of the separator is not specifically limited. As specific examples, the separator includes at least one of PP separator, PE separator, single-sided ceramic separator, double-sided ceramic separator, non-woven fabric separator, and glass fiber separator.

The positive electrode plate includes a positive electrode current collector and a positive electrode material layer formed on the positive electrode current collector, and the positive electrode material layer includes a positive active material, a positive electrode binder, and a positive conductive agent.

For the sodium-ion battery, the positive active material may include, but not limited to, one or more of transition metal oxides, polyanionic compounds, organic polymers, or Prussian blue-types materials. For the sodium transition metal oxides, the transition metal may include at least one of Mn, Fe, Ni, Co, Cr, Cu, Ti, Zn, V, Zr, and Ce. Examples of the sodium transition metal oxides include NaₓMO₂, where M is one or more of Ti, V, Mn, Co, Ni, Fe, Cr, and Cu, with 0 < x ≤ 1, such as Na[Ni_{1/3}Fe_{1/3}Mn_{1/3}]O₂.

The polyanionic compounds mentioned above are compounds with sodium ion, transition metal ion, and tetrahedral (YO₄)ⁿ⁻ anion unit. The transition metal may be at least one of Mn, Fe, Ni, Co, Cr, Cu, Ti, Zn, V, Zr, and Ce. Y may be at least one of P, S, and Si, and n represents the valence of (YO₄)ⁿ⁻, such as Na₃V₂(PO₄)₃.

The Prussian blue-types compounds mentioned above are compounds containing sodium ion, transition metal ion, and cyanide ion (CN⁻), the chemical formula of which can be represented by NaₓM1[M2(CN)₆], where 0 < x ≤ 2, and M1 and M2 are each at least one of Ni, Cu, Fe, Mn, Co, and Zn.

The specific material of the above positive electrode binder is not particularly limited. As specific examples, the positive electrode binder may include, but not limited to, one or more of polyvinylidene fluoride (PVDF), polytetrafluoroethylene (PTFE), polyacrylonitrile (PAN), and polyacrylic acid (PAA).

The specific material of the positive conductive agent is not particularly limited. As specific examples, the positive conductive agent may include, but not limited to, one or more of acetylene black, conductive carbon black, carbon nanotubes, carbon fibers, and graphene.

In an embodiment of the present disclosure, the specific material of the positive electrode current collector is not particularly limited. As specific examples, the positive electrode current collector may include, but not limited to, at least one of aluminum foil, carbon-coated aluminum foil, and stainless steel foil.

In an embodiment of the present disclosure, the above electrolyte solution includes an electrolyte salt and an organic solvent, where the specific types and compositions of the electrolyte salt and organic solvent are conventional choices in the field of batteries and can be selected according to actual needs.

In some embodiments, the electrolyte salt may include, but not limited to, at least one of sodium hexafluorophosphate (NaPF₆), sodium tetrafluoroborate (NaBF₄), sodium perchlorate (NaClO₄), sodium bis(trifluoromethanesulfonyl)imide (NaN(CF₃SO₂)₂), sodium bis(fluorosulfonyl)imide (NaN(SO₂F)₂), sodium borate bis(oxalate) (NaB(C₂O₄)₂), and sodium borate difluorooxalate (NaBF₂C₂O₄).

In some embodiments, the organic solvent may include, but not limited to, at least one of ethylene carbonate (EC), propylene carbonate (PC), diethyl carbonate (DEC), ethyl methyl carbonate (EMC), dimethyl carbonate (DMC), fluoroethylene carbonate (FEC), diethylene glycol dimethyl ether (DEGDME), ethylene glycol dimethyl ether (DME), 1,3-dioxolane (DOL), or tetraethylene glycol dimethyl ether (TEGDME).

The sodium-ion battery in the present disclosure may include the forms of a battery cell, a battery module, and a battery pack. In some embodiments, the battery cell can be assembled into a battery module. The number of battery cells included in the battery module can be one or more, and the specific number can be selected by those skilled in the art based on the application and capacity of the battery module. In some embodiments, the battery modules can further be assembled into a battery pack. The number of battery modules included in the battery pack can be one or more, and the specific number can be selected by those skilled in the art based on the application and capacity of the battery pack.

In a third aspect of the present disclosure, the present disclosure provides an electric device. According to an embodiment of the present disclosure, the electric device includes the sodium-ion battery described above. As a result, the electric device possesses all the advantages of the sodium-ion battery, which will not be repeated here.

Specifically, the electric device mentioned above can include, but is not limited to, mobile phone, tablet, laptop, electric toy, electric tool, electric bicycle, electric vehicle, ship, spacecraft, and the like. Among these, electric toy may include stationary or mobile electric toys, such as gaming console, electric car toy, electric boat toy, and electric airplane toy, and the like, and spacecraft can include airplane, rocket, space shuttle, and space capsule, and the like.

The following describes the embodiments of the present disclosure in detail. It may be noted that the embodiments described below are exemplary and are only intended to explain the present disclosure, not to limit it. Additionally, unless otherwise specified, all reagents used in the following examples are commercially available or can be synthesized according to methods described herein or known methods. For reaction conditions not listed, they are easily accessible to those skilled in the art.

### Example 1

This Example provided a sodium-ion battery, the preparation method of which included the following steps:

### (1) Preparation of negative electrode plate

Carbon nanotubes, a polyacrylate binder, and β"-Al₂O₃ were first dispersed into NMP solvent and mixed uniformly to obtain a carbon coating slurry, in which a weight ratio of carbon nanotubes, polyacrylate, and β"-Al₂O₃ was 70:25:5. The carbon coating slurry was coated onto the aluminum foil negative current collector and subjected to drying, cold pressing, slitting, cutting into sheets for subsequent use. The carbon coating has a thickness of 5 µm.

Then, straight holes with a diameter of 2 µm and a depth of 3 µm were formed in the surface of the carbon coating using laser radiation with a density of 2,000 holes/mm², to obtain the negative electrode plate of the present disclosure.

### (2) Preparation of positive electrode plate

A positive active material (Na₄Fe₃(PO₄)₂P₂O₇), a conductive agent (Super-P), and a binder (PVDF)were mixed in a weight ratio of 96:2:2. The mixed powder was placed in a vacuum mixer and added with N-methyl-2-pyrrolidone (NMP). The mixture was stirred uniformly to obtain a positive electrode slurry. The positive electrode slurry was evenly coated on both sides of an aluminum foil (i.e., a positive electrode current collector). The coated positive electrode current collector was transferred to an oven for drying, then subjected to rolling, and cutting to obtain the positive electrode plate

### (3) Preparation of separator

A polyethylene film with a thickness of 17 µm was used as the separator.

### (4) Preparation of electrolyte solution

The dry sodium salt (NaPF₆) was added in a solvent mixture of diethylene glycol dimethyl ether and tetraethylene glycol dimethyl ether to prepare an electrolyte solution with a concentration of 1 mol/L. A volume ratio of diethylene glycol dimethyl ether to tetraethylene glycol dimethyl ether was 1:1.

### (5) Preparation of sodium-ion battery:

The prepared positive electrode plate, separator, and negative electrode plate were stacked in sequence, to allow the separator to be disposed between the positive and negative electrode plates, and wound to obtain a bare battery cell. The bare battery cell was placed into an aluminum-plastic pouch and subjected to drying, and then the electrolyte solution was injected, followed by processes of encapsulating in vacuum, standing, forming and shaping to obtain the pouch sodium-ion battery.

### Example 2

Examples 2 merely differed from Example 1 in that straight holes with a diameter of 1 µm and a depth of 4 µm were formed in the surface of the carbon coating using laser radiation with a density of 3,000 holes/mm². The rest part of Example 2 was the same as those of Example 1.

### Example 3

Example 3 merely differed from Example 1 in that straight holes with a diameter of 3 µm and a depth of 2 µm were formed in the surface of the carbon coating using laser radiation with a density of 1,000 holes/mm². The rest part of Example 3 was the same as those of Example 1.

### Example 4

Examples 4 merely differed from Example 1 in that β"-Al₂O₃ was replaced with Na₃Zr₂Si₂PO₁₂. The rest part of Example 4 was the same as those of Example 1.

### Example 5

Examples 5 merely differed from Example 1 in that β"-Al₂O₃ was replaced with Na_{3.25}La_{0.25}Zr_{0.5}Si₂PO₁₂. The rest part of Example 5 was the same as those of Example 1.

### Example 6

Examples 6 merely differed from Example 1 in that a weight ratio of carbon nanotubes, polyacrylate and β"-Al₂O₃ was 70:28:2. The rest part of Example 6 was the same as those of Example 1.

### Example 7

Examples 7 merely differed from Example 1 in that a weight ratio of carbon nanotubes, polyacrylate and β"-Al₂O₃ was 70:20: 10. The rest part of Example 7 was the same as those of Example 1.

### Example 8

Examples 8 merely differed from Example 1 in that the carbon nanotubes in the carbon coating slurry were replaced with a combination of carbon nanotubes and acetylene black at a weight ratio of carbon nanotubes to acetylene black of 80:20. The rest part of Example 8 was the same as those of Example 1.

### Example 9

Examples 9 merely differed from Example 1 in that replacing the carbon nanotubes in the carbon coating slurry in this Example with a combination of carbon nanotubes and graphene at a weight ratio of carbon nanotubes and graphene of 70:30. The rest part of Example 9 was the same as those of Example 1.

### Example 10

Examples 10 merely differed from Example 1 in that the carbon nanotubes in the carbon coating slurry were replaced with a combination of carbon nanotubes and mesophase carbon microbeads at a weight ratio of carbon nanotubes to mesophase carbon microbeads of 60:40. The rest part of Example 10 was the same as those of Example 1.

### Example 11

Examples 11 merely differed from Example 4 in that the carbon nanotubes in the carbon coating slurry were replaced with a combination of carbon fibers and acetylene black at a weight ratio of carbon fibers to acetylene black of 80:20. The rest part of Example 11 was the same as those of Example 4.

### Comparative Example 1

Comparative Example 1 merely differed from Example 1 in (1) preparation of the negative electrode plate: not forming straight holes in the surface of the carbon coating. The rest part of Comparative Example 1 was the same as those of Example 1.

### Comparative Example 2

Comparative Example 2 merely differed from Example 1 in (1) preparation of the negative electrode plate: not adding β"-Al₂O₃ to the carbon coating slurry. The rest part of Comparative Example 2 was the same as those of Example 1.

The contact angle between the electrolyte solution and the surface of the negative electrode plates prepared in Examples 1 to 11 and Comparative Examples 1 to 2 was measured according the following method: 1) placing a sample of negative electrode plate on a sample stage of a contact angle measurement device and adjusting the sample appropriately to ensure that the surface of the sample of negative electrode plate was at the same level as the liquid in the syringe; 2) slowly injecting the electrolyte solution onto the surface of the negative electrode plate sample using a syringe while ensuring that the liquid did not flow or spread on the surface; 3) capturing images of the liquid droplet on the sample surface including front and side views of the liquid droplet using the device's camera to obtain complete information of the contact angle; and 4) measuring the contact angle using the measurement software's ruler tool, and performing multiple measurements to calculate the average to improve the accuracy. The measurement results were shown in Table 1.

The surface roughness of the negative electrode plates in Examples 1 to 11 and Comparative Examples 1 to 2 was measured according the following method: taking the cut negative electrode plate and calculating the surface roughness of the negative electrode plate using the ISO 25178 standard conforming to international specification for the measurement of microscopic surface geometry to obtain the parameter Ra. The measurement results were shown in Table 1.

The binding force between the sodium metal layer deposited on surface of the negative electrode plate and the surface of the negative electrode plate in Examples 1 to 11 and Comparative Examples 1 to 2 was measured according the following method: purchasing tapes with different adhesion strengths (furrow tape, chloroprene adhesive, and blue glue, and for the adhesion strength of the tapes, blue glue > chloroprene adhesive > furrow tape), disassembling fully charged cells in a glovebox, adhering tapes with different adhesion strengths to the surface of the deposition layer on the negative electrode, rolling back and forth three times with a 2kg roller, performing peel test using a small tensile strength machine, determining the condition of the sodium metal layer adhered to the tape to judge the adhesion. The measurement results were shown in Table 1.

The cycling performance of the sodium-ion batteries prepared in Examples 1-11 and Comparative Examples 1-2 was tested according the following method: applying a 0.25 MPa pre-tightening force to the cells using flat testing fixture for cycling test at a charge-discharge rate of 0.5P/0.5P within a voltage range controlled between 2.5V and 3.5V at room temperature, and recording the number of cycles at 90% loss of cycling capacity. The measurement results were shown in Table 1.

**[Table 1]**

| | Contact angle between electrolyte solution and surface of negative electrode plate/° | Roughness/µm | Adhesion | Number of cycles |
|---|---|---|---|---|
| Example 1 | 4.2 | 2.8 | Small amount of sodium layer was found on chloroprene adhesive, and sodium layer was found on a great area of blue glue | 453 |
| Example 2 | 4.6 | 2.6 | Small amount of sodium layer was found on chloroprene adhesive, and sodium layer was found on a great area of blue glue | 417 |
| Example 3 | 4.3 | 2.9 | Small amount of sodium layer was found on chloroprene adhesive, and sodium layer was found on a great area of blue glue | 423 |
| Example 4 | 3.6 | 2.8 | No significant sodium layer adhesion was found on blue glue | 512 |
| Example 5 | 3.9 | 2.9 | No significant sodium layer adhesion was found on blue glue | 508 |
| Example 6 | 4.8 | 2.7 | Small amount of sodium layer was found on chloroprene adhesive, and sodium layer was adhered to the whole area of blue glue | 383 |
| Example 7 | 4.1 | 2.6 | No significant sodium layer adhesion was found on chloroprene adhesive, and small amount of sodium layer was found on blue glue | 467 |
| Example 8 | 4.0 | 2.4 | Small amount of sodium layer was found on chloroprene adhesive, and small amount of sodium layer was found on blue glue | 468 |
| Example 9 | 4.1 | 2.6 | Small amount of sodium layer was found on chloroprene adhesive, and sodium layer was adhered to the whole area of blue glue | 459 |
| Example 10 | 4.1 | 2.7 | Small amount of sodium layer was found on chloroprene adhesive, and sodium layer was adhered to the whole area of blue glue | 455 |
| Example 11 | 3.4 | 2.6 | No significant sodium layer adhesion was found on blue glue | 593 |
| Comparative Example 1 | 17 | 2.0 | Significant sodium layer adhesion was found on furrow tape | 264 |
| Comparative Example 2 | 8.7 | 2.7 | Small amount of scattered sodium layer was found on furrow tape, and small amount of sodium layer was found on chloroprene adhesive | 324 |

Table 1 reveals that, compared to Comparative Example 1, each of the negative electrode plates of Examples 1 to 11 exhibited significantly reduced contact angle between the negative electrode plate and the electrolyte solution, significantly increased roughness of the surface of the negative electrode plate, significantly improved adhesion between the sodium metal layer deposited on the surface of the negative electrode plate and the negative electrode plate, and significantly enhanced cycling performance of the battery. These results indicate that the provision of holes in the surface of the negative electrode plate can significantly reduce the contact angle between the negative electrode plate and the electrolyte solution, significantly increase surface roughness, significantly improve the adhesion between the sodium metal layer deposited on the surface of the negative electrode plate and the negative electrode plate, and significantly enhance the cycling performance of the battery.

Table 1 further reveals that, compared to Comparative Example 2, each of the negative electrode plates of Examples 1 to 11 exhibited significantly reduced contact angles between the negative electrode plate and the electrolyte solution, and significantly enhanced cycling performance of the battery. These results indicate that the addition of the solid electrolyte to the carbon coating can effectively reduce the contact angle between the negative electrode plate and the electrolyte solution and enhance the cycling performance of the battery.

Furthermore, Table 1 reveals that, compared to Example 1, each of the negative electrode plates of Examples 8 to 10 exhibited reduced contact angles between the negative electrode plate and the electrolyte solution, and improved cycling performance of the battery. These results indicate that the combination of as carbon nanotubes as the one-dimensional carbon material and acetylene black the zero-dimensional carbon material, the combination of carbon nanotubes as the one-dimensional carbon material and graphene as the two-dimensional carbon material, or the combination of carbon nanotubes as the one-dimensional carbon material and mesophase carbon microbeads as the three-dimensional carbon material can enhance the affinity between the carbon coating and the electrolyte solution and improve the cycling performance of the battery.

Table 1 further reveal that, compared to Example 4, the negative electrode plate of Example 11 exhibited a significantly reduced contact angle between the negative electrode plate and the electrolyte solution, and significantly improved cycling performance of the battery. These results indicate that the combination of carbon fibers as the one-dimensional carbon materials and acetylene black as the zero-dimensional carbon material can significantly enhance the affinity between the carbon coating and the electrolyte solution, and improve the cycling performance of the battery. Moreover, Example 11 demonstrates the best overall performance, indicating that the optimal overall performance of the battery can be achieved by using Na₃Zr₂Si₂PO₁₂ as the solid electrolyte and the combination of carbon fibers as the one-dimensional carbon materials and acetylene black as the zero-dimensional carbon material.

Throughout the specification, the term such as "one embodiment" "some embodiments" "example" "specific example" or "some examples" is intended to indicate that the specific features, structures, materials, or characteristics described in connection with the embodiment or example are included in at least one embodiment or example of the present disclosure. In the specification, the indicative descriptions of the above terms do not necessarily refer to the same embodiment or example. Furthermore, the specific features, structures, materials, or characteristics described can be combined in any suitable manner in one or more embodiments or examples. Additionally, unless there are contradictions, those skilled in the art can combine and integrate the different embodiments or examples and the features of different embodiments or examples described in this specification. The invention is set out in the appended claims.

## Claims

1. A negative electrode plate, comprising:
a negative electrode current collector; and
a carbon coating disposed on at least a portion of a surface of the negative electrode current collector, wherein:
the carbon coating comprises a carbon material, a solid electrolyte, and a polymer binder, the solid electrolyte comprising at least one of β"-Al₂O₃, Na₃Zr₂Si₂PO₁₂, Na₃₊ₓLaₓZr₂ₓSi₂PO₁₂, Na₃PS₄, Na₁₁Sn₂PS₄, and Na₇P₃S₁₁, where 0 < x ≤ 0.5;
a surface of the carbon coating facing away from the negative electrode current collector has holes extending along a thickness direction of the carbon coating, a depth of the holes being smaller than a thickness of the carbon coating, wherein the depth of the holes is denoted as h₂, and the thickness of the carbon coating is denoted as h₁, h₂ and h₁ satisfying: 40% ≤ h₂/h₁ ≤ 80%,
**characterized in that**
the holes satisfy at least one of the following conditions: the holes have each a diameter ranging from 1 µm to 3 µm; and a density of the holes on the surface of the carbon coating ranges from 1,000 holes/mm² to 3,000 holes/mm²;
a weight ratio of the carbon material, the solid electrolyte, and the polymer binder is (60 to 80): (0.5 to 10): (10 to 30); and
the carbon material is a combination of a one-dimensional carbon material and at least one selected from zero-dimensional carbon material, two-dimensional carbon material, and three-dimensional carbon material.

2. The negative electrode plate according to claim 1, wherein a contact angle θ between a surface of the negative electrode plate and an electrolyte solution is measured according to the description and it satisfies: 0° ≤ θ ≤ 10°.

3. The negative electrode plate according to claim 1, wherein a roughness Ra of a surface of the negative electrode plate satisfies: 0.4µm ≤ Ra ≤ 3.2µm, wherein the roughness Ra of the surface of the negative electrode plate is calculated using ISO 25178 standard.

4. The negative electrode plate according to claim 1, wherein the thickness h₁ of the carbon coating is not greater than 5 µm.

5. The negative electrode plate according to claim 1, wherein the carbon material satisfies at least one of the following conditions:
the one-dimensional carbon material comprises at least one of carbon nanotubes and carbon fibers;
the zero-dimensional carbon material comprises at least one of acetylene black, furnace black, Ketjen black, and carbon quantum dots;
the two-dimensional carbon material comprises at least one of graphene and multilayer graphite sheet; and
the three-dimensional carbon material comprises at least one of mesophase carbon microbeads, natural graphite, artificial graphite, hard carbon, and porous activated carbon.

6. The negative electrode plate according to any one of claims 1 to 4, wherein the polymer binder comprises at least one of polyvinylidene fluoride, polytetrafluoroethylene, styrene-butadiene rubber, polyacrylates, polyacrylonitriles, polyacrylic acids, sodium polyacrylates, carboxymethyl cellulose, sodium alginate, gum arabic, xanthan gum, and guar gum.

7. A sodium-ion battery, comprising the negative electrode plate according to any one of claims 1 to 6.

8. An electric device, comprising the sodium-ion battery according to claim 7.

## Patentansprüche

1. Negative Elektrodenplatte, umfassend:
einen negativen Elektrodenstromkollektor; und
eine Kohlenstoffbeschichtung, die auf mindestens einem Teil einer Oberfläche des negativen Elektrodenstromkollektors angeordnet ist, wobei:
die Kohlenstoffbeschichtung ein Kohlenstoffmaterial, einen Festelektrolyten und ein Polymerbindemittel umfasst, wobei der Festelektrolyt mindestens eines von β''-Al₂O₃, Na₃Zr₂Si₂PO₁₂, Na₃₊ₓLaₓZr₂ₓSi₂PO₁₂, Na₃PS₄, Na₁₁Sn₂PS₄ und Na₇P₃S₁₁ umfasst, wobei 0 ≤ x ≤ 0,5 gilt;
eine von dem negativen Elektrodenstromkollektor abgewandte Oberfläche der Kohlenstoffbeschichtung Löcher aufweist, die sich entlang einer Dickenrichtung der Kohlenstoffbeschichtung erstrecken, wobei eine Tiefe der Löcher kleiner als eine Dicke der Kohlenstoffbeschichtung ist, wobei die Tiefe der Löcher als h2 bezeichnet wird und die Dicke der Kohlenstoffbeschichtung als h1 bezeichnet wird, wobei h2 und h1 die folgende Bedingung erfüllen: 40 % ≤ h2/h1 ≤ 80 %,
**dadurch gekennzeichnet, dass**
die Löcher mindestens eine der folgenden Bedingungen erfüllen: die Löcher weisen jeweils einen Durchmesser im Bereich von 1 µm bis 3 µm auf; und eine Dichte der Löcher auf der Oberfläche der Kohlenstoffbeschichtung liegt im Bereich von 1.000 Löchern/mm² bis 3.000 Löchern/mm² ;
ein Gewichtsverhältnis des Kohlenstoffmaterials, des Festelektrolyten und des Polymerbindemittels (60 bis 80):(0,5 bis 10):(10 bis 30) beträgt; und
das Kohlenstoffmaterial eine Kombination aus einem eindimensionalen Kohlenstoffmaterial und mindestens einem Material ist, das aus einem nulldimensionalen Kohlenstoffmaterial, einem zweidimensionalen Kohlenstoffmaterial und einem dreidimensionalen Kohlenstoffmaterial ausgewählt ist.

2. Negative Elektrodenplatte nach Anspruch 1, wobei ein Kontaktwinkel θ zwischen einer Oberfläche der negativen Elektrodenplatte und einer Elektrolytlösung gemäß der Beschreibung gemessen wird und die folgende Beziehung erfüllt: 0° ≤ θ ≤ 10°.

3. Negative Elektrodenplatte nach Anspruch 1, wobei eine Rauheit Ra einer Oberfläche der negativen Elektrodenplatte die folgende Beziehung erfüllt: 0,4 µm ≤ Ra ≤ 3,2 µm, wobei die Rauheit Ra der Oberfläche der negativen Elektrodenplatte unter Verwendung der Norm ISO 25178 berechnet wird.

4. Negative Elektrodenplatte nach Anspruch 1, wobei die Dicke h1 der Kohlenstoffbeschichtung nicht größer als 5 µm ist.

5. Negative Elektrodenplatte nach Anspruch 1, wobei das Kohlenstoffmaterial mindestens eine der folgenden Bedingungen erfüllt:
das eindimensionale Kohlenstoffmaterial mindestens eines von Kohlenstoffnanoröhren und Kohlenstofffasern umfasst;
das nulldimensionale Kohlenstoffmaterial mindestens eines von Acetylenruß, Ofenruß, Ketjen-Ruß und Kohlenstoff-Quantenpunkten umfasst;
das zweidimensionale Kohlenstoffmaterial mindestens eines von Graphen und einer mehrschichtigen Graphitfolie umfasst; und
das dreidimensionale Kohlenstoffmaterial mindestens eines von Mesophasenkohlenstoff-Mikrokügelchen, Naturgraphit, künstlichem Graphit, Hartkohlenstoff und poröser Aktivkohle umfasst.

6. Negative Elektrodenplatte nach einem der Ansprüche 1 bis 4, wobei das Polymerbindemittel mindestens eines von Polyvinylidenfluorid, Polytetrafluorethylen, Styrol-Butadien-Kautschuk, Polyacrylaten, Polyacrylnitrilen, Polyacrylsäuren, Natriumpolyacrylaten, Carboxymethylcellulose, Natriumalginat, Gummi arabicum, Xanthangummi und Guarkernmehl umfasst.

7. Natriumionenbatterie, umfassend die negative Elektrodenplatte nach einem der Ansprüche 1 bis 6.

8. Elektrische Vorrichtung, umfassend die Natriumionenbatterie nach Anspruch 7.

## Revendications

1. Une plaque d'électrode négative, comprenant :
un collecteur de courant d'électrode négative ; et
un revêtement de carbone disposé sur au moins une partie d'une surface du collecteur de courant d'électrode négative, dans lequel :
le revêtement de carbone comprend un matériau carboné, un électrolyte solide et un liant polymère, l'électrolyte solide comprenant au moins l'un parmi β''-Al₂O₃, Na₃Zr₂Si₂PO₁₂, Na₃₊ₓLaₓZr₂ₓSi₂PO₁₂, Na₃PS₄, Na₁₁Sn₂PS₄ et Na₇P₃S₁₁, où 0 ≤ x ≤ 0,5 ;
une surface du revêtement de carbone orientée à l'opposé du collecteur de courant d'électrode négative présente des trous s'étendant le long d'une direction de l'épaisseur du revêtement de carbone, une profondeur des trous étant inférieure à une épaisseur du revêtement de carbone, dans lequel la profondeur des trous est désignée par h2, et l'épaisseur du revêtement de carbone est désignée par h1, h2 et h1 satisfaisant à : 40 % ≤ h₂/h₁ ≤ 80 %,
**caractérisée en ce que**
les trous satisfont à au moins l'une des conditions suivantes : les trous ont chacun un diamètre allant de 1 µm à 3 µm ; et une densité des trous sur la surface du revêtement de carbone va de 1 000 trous/mm² à 3 000 trous/mm² ;
un rapport en poids du matériau carboné, de l'électrolyte solide et du liant polymère est de (60 à 80) : (0,5 à 10) : (10 à 30) ; et
le matériau carboné est une combinaison d'un matériau carboné unidimensionnel et d'au moins un élément choisi parmi un matériau carboné zéro-dimensionnel, un matériau carboné bidimensionnel et un matériau carboné tridimensionnel.

2. Plaque d'électrode négative selon la revendication 1, dans laquelle un angle de contact θ entre une surface de la plaque d'électrode négative et une solution électrolytique est mesuré selon la description et il satisfait à : 0° ≤ θ ≤ 10°.

3. Plaque d'électrode négative selon la revendication 1, dans laquelle une rugosité Ra d'une surface de la plaque d'électrode négative satisfait à : 0,4 µm ≤ Ra ≤ 3,2 µm, dans laquelle la rugosité Ra de la surface de la plaque d'électrode négative est calculée en utilisant la norme ISO 25178.

4. Plaque d'électrode négative selon la revendication 1, dans laquelle l'épaisseur h1 du revêtement de carbone n'est pas supérieure à 5 µm.

5. Plaque d'électrode négative selon la revendication 1, dans laquelle le matériau carboné satisfait à au moins l'une des conditions suivantes :
le matériau carboné unidimensionnel comprend au moins l'un parmi des nanotubes de carbone et des fibres de carbone ;
le matériau carboné zéro-dimensionnel comprend au moins l'un parmi le noir d'acétylène, le noir de four, le noir de Ketjen et des points quantiques de carbone ;
le matériau carboné bidimensionnel comprend au moins l'un parmi le graphène et une feuille de graphite multicouche ; et
le matériau carboné tridimensionnel comprend au moins l'un parmi des microbilles de carbone mésophasique, du graphite naturel, du graphite artificiel, du carbone dur et du carbone actif poreux.

6. Plaque d'électrode négative selon l'une quelconque des revendications 1 à 4, dans laquelle le liant polymère comprend au moins l'un parmi le fluorure de polyvinylidène, le polytétrafluoroéthylène, le caoutchouc styrène-butadiène, des polyacrylates, des polyacrylonitriles, des acides polyacryliques, des polyacrylates de sodium, la carboxyméthylcellulose, l'alginate de sodium, la gomme arabique, la gomme xanthane et la gomme guar.

7. Batterie sodium-ion, comprenant la plaque d'électrode négative selon l'une quelconque des revendications 1 à 6.

8. Dispositif électrique, comprenant la batterie sodium-ion selon la revendication 7.
